# FASCICULE DE BREVET EUROPEEN

(11) **EP 3 198 674 B1**
(45) Date de publication et mention de la délivrance du brevet: **27.11.2019**
(21) Numéro de dépôt: 15775776.6
(22) Date de dépôt: 18.09.2015
(51) Int. Cl.: H01M 8/2475, H01M 8/0662, H01M 8/0438, H01M 8/04007, B64D 45/00, B64D 41/00, H01M 8/04291

(54) **SYSTEME DE PILE A COMBUSTIBLE SECURISEE**
SICHERES BRENNSTOFFZELLENSYSTEM
SECURE FUEL CELL SYSTEM

(30) Priorité: 23.09.2014 FR 1458959
(43) Date de publication de la demande: 02.08.2017
(73) Titulaire: Safran Power Units, 31200 Toulouse (FR)
(72) Inventeur: BOUDJEMAA, Fabien, F-92380 Garches (FR)
(74) Mandataire: Gilbey, Vincent
(86) Numéro de dépôt international: PCT/FR2015/052514
(87) Numéro de publication internationale: WO 2016/046477

(56) Documents cités:
- US-A1- 2007 111 060
- US-A1- 2011 045 369
- US-A1- 2013 288 160

## Description

### DOMAINE TECHNIQUE GENERAL

La présente invention concerne le domaine des piles à combustible, et vise plus particulièrement les piles à combustibles destinées à des applications dans le domaine de l'aéronautique.

### ETAT DE L'ART

Les piles à combustibles, bien que présentant un intérêt important en termes de génération d'énergie, demeurent peu exploitées dans certains domaines tels que l'aéronautique, en raison des exigences de sécurité très élevées qui y sont appliquées.

En effet, dans les piles à combustible à haute température, par exemple de type pile à membrane échangeuse de protons, une problématique concerne les fuites d'hydrogène au niveau de l'empilement.

La présence d'hydrogène est un facteur de risque important, en raison de points chauds et de sources électriques, pouvant provoquer une inflammation ou une explosion dans certains cas.

On comprend donc bien que de tels risques ne sont pas acceptables, en particulier dans le domaine de l'aéronautique, et qu'il est par conséquent nécessaire de développer des systèmes de sécurité pour les piles à combustible afin de remédier à ces fuites d'hydrogène.

A ce jour, les solutions retenues consistent à ventiler la zone dans laquelle est disposée la pile à combustible de manière à diluer les éventuelles fuites d'hydrogène dans le milieu ambiant, ou à disposer des détecteurs d'hydrogènes couplés à un système pouvant réaliser un balayage d'un gaz inerte tel que de l'azote en cas de détection de fuite d'hydrogène.

Ces solutions sont toutefois peu satisfaisantes, en ce qu'elles limitent la localisation des piles à combustibles à certaines zones d'un aéronef, en l'occurrence les zones hors cabine.

Ces solutions nécessitent de plus un ventilateur externe pour réaliser le brassage d'air. Or, la moindre défaillance du ventilateur nécessite alors un arrêt de la pile à combustible afin de sécuriser le système.

D'autres moyens de sécurisation d'une pile à combustible sont connus de US2011/0045369 A1. La sécurisation d'un réservoir de carburant est par ailleurs connue de US2007/0111060A1.

### PRESENTATION DE L'INVENTION

La présente invention vise ainsi à remédier au moins partiellement à ces problématiques, et propose un ensemble comprenant une pile à combustible disposée dans un caisson,
la pile à combustible comprenant une anode munie d'une admission et un refoulement anodique, une cathode munie d'une admission d'oxygène et d'un refoulement cathodique,
caractérisé en ce que le caisson comprend une enceinte étanche, dans laquelle est disposée la pile à combustible, configuré de manière à ce que le gaz rejeté par la pile à combustible soit déversé dans l'enceinte étanche, de manière à générer une surpression d'air appauvri en oxygène dans l'enceinte étanche.

Selon un mode de réalisation particulier, l'ensemble comprend en outre un condenseur disposé dans l'enceinte étanche et relié au refoulement cathodique, le condenseur étant configuré de manière à recueillir et évacuer l'eau du refoulement cathodique vers l'extérieur du caisson, l'air du refoulement cathodique étant évacué vers l'enceinte étanche du caisson.

Le caisson comprend typiquement une soupape tarée, configurée pour définir une pression maximale au sein de l'enceinte étanche, supérieure à une pression ambiante prédéterminée.

L'admission d'oxygène de la cathode est par exemple reliée au milieu ambiant au moyen d'un clapet anti retour.

La pile à combustible est typiquement une pile à combustible à membrane échangeuse de protons.

La pile à combustible comprend typiquement en outre un système de refroidissement comprenant un échangeur thermique disposé en dehors de l'enceinte étanche du caisson.

L'invention concerne également un aéronef comprenant un ensemble tel que défini précédemment, disposé dans un volume pressurisé de l'aéronef à une pression ambiante.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 représente schématiquement un ensemble selon un aspect de l'invention,
- la figure 2 illustre schématiquement le fonctionnement d'un tel ensemble.

### DESCRIPTION DETAILLEE

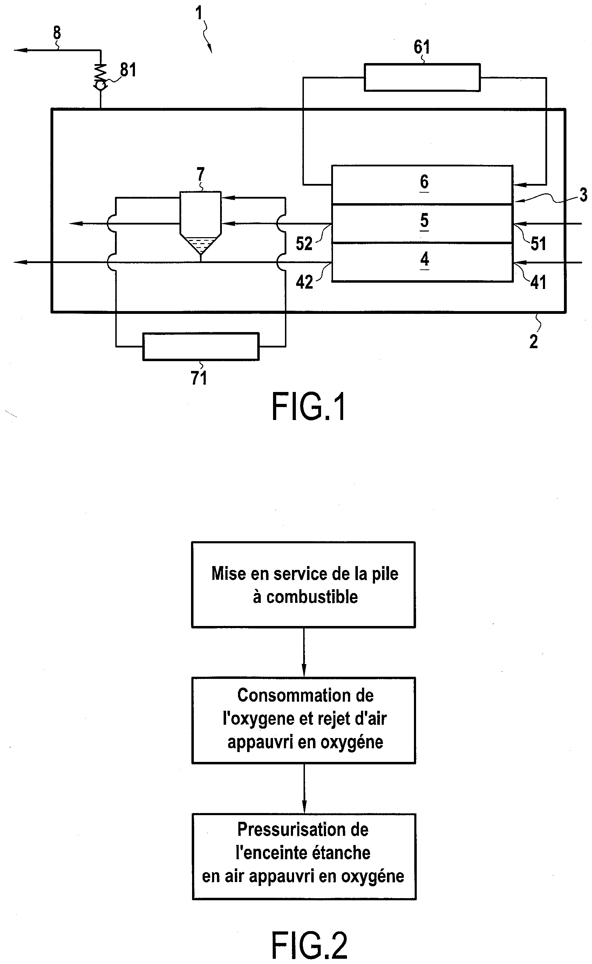

La figure 1 représente schématiquement un ensemble 1 selon un aspect de l'invention.

L'ensemble 1 tel que présenté comprend un caisson 2 dans lequel est disposée une pile à combustible 3.

Le caisson 2 forme une enceinte étanche, dans laquelle est disposée la pile à combustible 3, par opposition au milieu ambiant.

La pile à combustible 3 comprend une anode 4 munie d'une admission 41 et un refoulement anodique 42, une cathode 5 munie d'une admission d'oxygène 51 et d'un refoulement cathodique 52, et un système de refroidissement 6.

La pile à combustible 3 est typiquement du type à membrane échangeuse de protons haute température, communément désignée par la désignation PEMFC d'après la désignation en langue anglaise « Proton Exchange Membrane Fuel Cell ».

Dans la description qui suit, on prendra pour exemple une pile à combustible réalisant une réaction associant de l'hydrogène à l'anode 4 et de l'oxygène à la cathode 5. Cette description se transpose toutefois directement à toute autre pile à combustible, dès lors qu'elle consomme de l'oxygène, et la présente invention ne doit donc pas être interprétée comme limitée à un unique type de pile à combustible.

L'anode 4 de la pile à combustible 3 est alimentée en hydrogène via son admission d'hydrogène 41, via une réserve d'hydrogène dédiée. L'admission d'hydrogène 41 de l'anode 4 est par exemple reliée au milieu ambiant au moyen d'un clapet anti retour.

La cathode 5 de la pile à combustible 3 est alimentée en oxygène via son admission d'oxygène 51, soit en prélevant de l'air dans le milieu ambiant, soit via une réserve d'oxygène dédiée. L'admission d'oxygène 51 de la cathode 5 est par exemple reliée au milieu ambiant au moyen d'un clapet anti retour.

Le système de refroidissement 6 tel que représenté comprend un échangeur thermique 61 disposé hors de l'enceinte étanche du caisson 2, pouvant par exemple être associé à un ventilateur, et assurant ainsi un refroidissement d'un fluide caloporteur du système de refroidissement 6.

Le fonctionnement d'une pile à combustible 3 de type PEMFC est bien connu, mais est rappelé ici brièvement à titre d'exemple non limitatif.

L'hydrogène est amené à l'anode 4, où il se dissocie en protons et en électrons. Les protons traversent la membrane de la pile à combustible, tandis que les électrons ne peuvent pas la traverser, et empruntent donc un circuit spécifique, générant ainsi un courant électrique.

Les protons, après avoir traversé la membrane, réagissent avec l'oxygène de la cathode 5, pour former de l'eau.

Dans l'ensemble 1 représenté, le refoulement anodique 42 est relié au milieu ambiant, ou par exemple à l'échappement d'un aéronef si l'ensemble est utilisé dans un aéronef.

Le refoulement cathodique 52 est quant à lui relié au volume interne de l'enceinte étanche du caisson 2, de sorte que le gaz rejeté après la réaction au niveau de l'anode 4 soit injecté dans le volume interne de l'enceinte étanche.

Dans le mode de réalisation représenté, l'ensemble comprend un condenseur 7, relié au refoulement cathodique 52, de manière à séparer l'eau des gaz refoulés par la cathode 5.

Les gaz refoulés par la cathode 5 sont alors injectés dans l'enceinte étanche du caisson 2, tandis que l'eau est évacuée vers le milieu ambiant, ou par exemple vers l'échappement d'un aéronef si l'ensemble est utilisé dans un aéronef.

Le condenseur 7 tel que représenté comprend en outre un échangeur thermique 71 disposé hors de l'enceinte étanche, pouvant par exemple être associé à un ventilateur, et assurant ainsi un refroidissement d'un fluide caloporteur circulant dans le condenseur 7.

Le caisson 2 comprend typiquement un orifice de sortie 8 muni d'une soupape tarée 81, définissant ainsi une valeur de pression maximale au sein de l'enceinte étanche du caisson 2.

En fonctionnement, la pile à combustible 3 est mise en service. L'anode 4 est alimentée en hydrogène, et la cathode 5 est alimentée en oxygène, par exemple en prélevant de l'air dans le milieu ambiant.

Le fonctionnement de la pile à combustible génère du courant, et rejette de l'eau comme décrit précédemment, ainsi que de l'air appauvri en oxygène dans la mesure où la réaction au niveau de la cathode a consommé une partie de l'oxygène de l'air traversant la pile à combustible.

La cathode refoule donc par son refoulement cathodique 52 de l'air appauvri en oxygène et de l'eau. L'air appauvri en oxygène rejeté par la cathode 5 a typiquement un taux d'oxygène inférieur à 9%. L'eau est captée par le condenseur 7 et évacuée vers le milieu ambiant, tandis que l'air appauvri en oxygène est évacué dans l'enceinte étanche du caisson 2.

Le refoulement anodique 42 est quant à lui relié au milieu ambiant, et évacue donc les gaz en sortie de l'anode 4 vers le milieu ambiant, ou bien à un drain, pour l'évacuer de l'aéronef dans le cas d'une telle application.

L'enceinte étanche du caisson 2 se remplit donc progressivement d'air appauvri en oxygène rejeté par la cathode 5, augmentant la pression au sein de l'enceinte étanche jusqu'à la valeur seuil définie par la soupape tarée 81, au-delà de laquelle l'excédent d'air est évacué par la soupape tarée 81 vers le milieu ambiant.

L'enceinte étanche est ainsi progressivement remplie d'air pauvre en oxygène, sensiblement inerte.

La figure 2 représente schématiquement ces étapes du fonctionnement.

Des essais ont montré que dans un volume ainsi rempli d'air appauvri en oxygène, avec un taux d'oxygène inférieur à 10%, ou encore inférieur à 9%, il n'est pas possible d'enflammer une éventuelle fuite d'hydrogène de la pile à combustible 3.

L'ensemble 1 proposé permet ainsi de sécuriser la pile à combustible 3, en la disposant dans un volume interne qui, lors du fonctionnement de la pile à combustible, devient inerte.

Le fonctionnement de l'ensemble 1 tel que proposé est de plus un fonctionnement passif. Il ne requiert pas de système de ventilation dédié ou de capteurs nécessitant d'arrêter la pile à combustible en cas de panne.

L'ensemble 1 tel que proposé peut ainsi être utilisé de manière fiable dans un aéronef. L'ensemble 1 peut alors être disposé dans une zone pressurisée de l'aéronef, où la pression est typiquement maintenue à 0,8 bar environ. La soupape tarée 81 définit alors typiquement une pression maximale de 1 bar au sein du volume interne de l'enceinte étanche du caisson 2, de manière à établir une surpression en air inerte dans l'enceinte étanche du caisson 2 lors du fonctionnement de la pile à combustible 3.

## Revendications

1. Ensemble (1) comprenant une pile à combustible (3) disposée dans un caisson (2),
la pile à combustible (3) comprenant une anode (4) munie d'une admission (41) et un refoulement anodique (42), une cathode (5) munie d'une admission d'oxygène (51) et d'un refoulement cathodique (52), **caractérisé en ce que** le caisson (2) comprend une enceinte étanche, dans laquelle est disposée la pile à combustible (3), configuré de manière à ce que le gaz rejeté par la pile à combustible soit déversé dans l'enceinte étanche, de manière à générer une surpression d'air appauvri en oxygène dans l'enceinte étanche.

2. Ensemble (1) selon la revendication 1, comprenant en outre un condenseur (7) disposé dans l'enceinte étanche et relié au refoulement cathodique (52), le condenseur (7) étant configuré de manière à recueillir et évacuer l'eau du refoulement cathodique (52) vers l'extérieur du caisson (2), l'air du refoulement cathodique (52) étant évacué vers l'enceinte étanche du caisson (2).

3. Ensemble (1) selon l'une des revendications 1 ou 2, dans lequel le caisson (2) comprend une soupape tarée (81), configurée pour définir une pression maximale au sein de l'enceinte étanche, supérieure à une pression ambiante prédéterminée.

4. Ensemble (1) selon l'une des revendications 1 à 3, dans lequel l'admission d'oxygène (51) de la cathode est reliée au milieu ambiant au moyen d'un clapet anti retour.

5. Ensemble (1) selon l'une des revendications 1 à 4, dans lequel la pile à combustible (3) est une pile à combustible à membrane échangeuse de protons.

6. Ensemble (1) selon l'une des revendications 1 à 5, dans lequel la pile à combustible (3) comprend en outre un système de refroidissement (6) comprenant un échangeur thermique (61) disposé en dehors de l'enceinte étanche du caisson (2).

7. Aéronef comprenant un ensemble (1) selon l'une des revendications 1 à 6, disposé dans un volume pressurisé de l'aéronef à une pression ambiante.

## Patentansprüche

1. Anordnung (1), umfassend eine in einem Behälter (2) angeordnete Brennstoffzelle (3),
wobei die Brennstoffzelle (3) eine mit einem Einlass (41) und einer Anodenentladung (42) versehene Anode (4) sowie eine mit einem Sauerstoffeinlass (51) und einer Kathodenentladung (52) versehene Kathode (5) umfasst,
**dadurch gekennzeichnet, dass** der Behälter (2) ein abgedichtetes Gehäuse umfasst, in dem die Brennstoffzelle (3) angeordnet ist, wobei die Konfiguration so erfolgt, dass das von der Brennstoffzelle abgeführte Gas in das abgedichtete Gehäuse abgegeben wird, um so einen Überdruck an sauerstoffarmer Luft in dem abgedichteten Gehäuse zu erzeugen.

2. Anordnung (1) nach Anspruch 1, ferner umfassend einen Kondensator (7), der in dem abgedichteten Gehäuse angeordnet und mit der Kathodenentladung (52) verbunden ist, wobei der Kondensator (7) so konfiguriert ist, dass er Wasser aus der Kathodenentladung (52) sammelt und zur Außenseite des Behälters (2) abgibt, wobei die Luft aus der Kathodenentladung (52) an das abgedichtete Gehäuse des Behälters (2) abgegeben wird.

3. Anordnung (1) nach einem der Ansprüche 1 oder 2, wobei der Behälter (2) ein kalibriertes Ventil (81) umfasst, das konfiguriert ist, um einen maximalen Druck innerhalb des abgedichteten Gehäuses zu definieren, der größer als ein vorbestimmter Umgebungsdruck ist.

4. Anordnung (1) nach einem der Ansprüche 1 bis 3, wobei der Sauerstoffeinlass (51) der Kathode über ein Rückschlagventil mit der Umgebung verbunden ist.

5. Anordnung (1) nach einem der Ansprüche 1 bis 4, wobei die Brennstoffzelle (3) eine Brennstoffzelle mit Protonenaustauschmembran ist.

6. Anordnung (1) nach einem der Ansprüche 1 bis 5, wobei die Brennstoffzelle (3) ferner ein Kühlsystem (6) mit einem Wärmetauscher (61) umfasst, der außerhalb des abgedichteten Gehäuses des Behälters (2) angeordnet ist.

7. Flugzeug, umfassend eine Anordnung (1) nach einem der Ansprüche 1 bis 6, die in einem unter Druck stehenden Volumen des Flugzeugs mit Umgebungsdruck angeordnet ist.

## Claims

1. An assembly (1) comprising a fuel cell (3) arranged in a housing (2), the fuel cell (3) comprising an anode (4) having an admission (41) and an anode discharge (42), and a cathode (5) having an oxygen admission (51) and a cathode discharge (52), the assembly (1) being **characterized in that** the housing (2) comprises a sealed enclosure in which the fuel cell (3) is arranged and configured in such a manner that the gas discharged by the fuel cell is released into the sealed enclosure so as to generate an over-pressure of oxygen-depleted air inside the sealed enclosure.

2. An assembly (1) according to claim 1, further comprising a condenser (7) arranged inside the sealed enclosure and connected to the cathode discharge (52), the condenser (7) being configured so as to collect water from the cathode discharge (52) and to evacuate it to the outside of the housing (2), with the air from the cathode discharge (52) being evacuated into the sealed enclosure of the housing (2).

3. An assembly (1) according to claim 1 or claim 2, wherein the housing (2) includes a rated valve (81) configured to define a maximum pressure within the sealed enclosure, which pressure is higher than a predetermined ambient pressure.

4. An assembly (1) according to any one of claims 1 to 3, wherein the oxygen admission (51) of the cathode is connected to the ambient medium by means of a check valve.

5. An assembly (1) according to any one of claims 1 to 4, wherein the fuel cell (3) is a proton exchange membrane fuel cell.

6. An assembly (1) according to any one of claims 1 to 5, wherein the fuel cell (3) further comprises a cooling system (6) including a heat exchanger (61) arranged outside the sealed enclosure of the housing (2).

7. An aircraft including an assembly (1) according to any one of claims 1 to 6, arranged in a volume of the aircraft that is pressurized at an ambient pressure.
